# EUROPÄISCHE PATENTSCHRIFT

(11) **EP 3 601 840 B1**
(45) Veröffentlichungstag und Bekanntmachung des Hinweises auf die Patenterteilung: **22.07.2026**
(21) Anmeldenummer: 18715565.0
(22) Anmeldetag: 26.03.2018
(51) Int. Cl.: F16F 9/34, F16F 9/46, F16F 9/19

(54) **HYDRAULISCHER SCHWINGUNGSDÄMPFER, INSBESONDERE FÜR EIN FAHRZEUGFAHRWERK**
HYDRAULIC VIBRATION DAMPER, IN PARTICULAR FOR A VEHICLE CHASSIS
AMORTISSEUR D'OSCILLATIONS HYDRAULIQUE, EN PARTICULIER POUR UN CHÂSSIS DE VÉHICULE

(30) Priorität: 29.03.2017 DE 102017106802
(43) Veröffentlichungstag der Anmeldung: 05.02.2020
(73) Patentinhaber: thyssenkrupp Bilstein GmbH, 58256 Ennepetal (DE); thyssenkrupp AG, 45143 Essen (DE)
(72) Erfinder: HAMERS, Wolfgang, 52428 Jülich (DE)
(74) Vertreter: thyssenkrupp Intellectual Property GmbH
(86) Internationale Anmeldenummer: PCT/EP2018/057586
(87) Internationale Veröffentlichungsnummer: WO 2018/177976

(56) Entgegenhaltungen:
- WO-A1-2016/192847
- DE-A1- 102008 015 412
- DE-A1- 102008 015 415
- DE-A1- 102014 116 264
- DE-A1- 102014 201 516
- DE-A1- 102014 215 571
- DE-A1- 102015 102 478
- DE-A1- 3 917 064
- DE-A1- 4 129 581
- US-A- 5 996 748
- US-A1- 2015 276 003

## Beschreibung

### Stand der Technik

Die vorliegende Erfindung geht von einem Schwingungsdämpfer mit einem Bypasskanal, wie er beispielsweise bei Fahrzeugen zum Einsatz kommt, aus.

Ein solcher Schwingungsdämpfer ist aus der Druckschrift DE 10 2008 015 412 B4 bekannt. Bei diesem offenbarten Schwingungsdämpfer kommt ein Bypasskanalsystem zur Anwendung, das aus zwei Unterkanälen besteht. Für Zug- und Druckstufe des Kolbens kommt jeweils ein elektromagnetisches Stellventil zum Einsatz mit dem der Strömungsquerschnitt für die jeweilige Durchflussrichtung eingestellt wird. Durch die Stellventile kann die Dämpfkraft des Schwingungsdämpfers für Zug- und Druckstufe separat eingestellt werden. Bei diesem Schwingungsdämpfer wird darüber hinaus bei Druck- und Zugstufe des Kolbens jeweils nur einer der Unterkanäle durchströmt. Das Schließen des jeweils anderen Unterkanals wird durch Rückschlagventile realisiert, von denen jeweils mindestens eines für beide Durchflussrichtungen angebracht ist. Diese Rückschlagventile unterbinden den Durchfluss durch den jeweiligen Unterkanal bei jeweils einer Bewegungsrichtung des Kolbens. Das Bypasskanalsystem ist in diesem Fall in einem Gehäuse ausgebildet, das an das Hauptrohr des Schwingungsdämpfers als Rucksackventil angebracht ist, wobei durch Bohrungen im Hauptrohr eine Durchströmung des Bypasskanalsystems ermöglicht wird. Nachteilig bei diesem bekannten Schwingungsdämpfer ist, dass die Rückschlagventile, welche zum Schließen der Unterkanäle des Bypasskanals angebracht sind, für eine Bewegungsrichtung des Kolbens jeweils vom gesamten Volumenstrom durchströmt werden und bei der anderen Bewegungsrichtung des Kolbens ihren jeweiligen Unterkanal verschließen. Somit kommt es jeweils in einer Bewegungsrichtung des Kolbens beim Durchströmen der Rückschlagventile zu einer weiten Öffnung der Rückschlagscheibe und einer einhergehenden starken Komprimierung der Rückstellfeder. Bei der Umkehr der Bewegungsrichtung des Kolbens entstehen so starke Druckstöße beim Schließen der Rückschlagventile. Dieses Verhalten wirkt sich nachteilig auf den Komfort bei der Benutzung des Schwingungsdämpfers aus, beispielsweise durch eine hohe Lärmentwicklung bei den Rückschlägen der Ventilscheiben, und ist ebenso nachteilig für die Lebensdauer und die Abnutzung der Rückschlagventile.

Andere Ausführungen von Schwingungsdämpfern und Ventilanordnungen von Schwingungsdämpfern gemäß dem Stand der Technik sind in DE 10 2015 102 478 A1, DE 102014 116 264 A1 und DE 10 2008 015 415 B4 offenbart.

Die DE 10 2014 116 264 A1 beschreibt einen regelbaren Schwingungsdämpfer für Kraftfahrzeuge, bei dem der Kolben neben den üblichen Ventilbaugruppen zusätzliche Bypasskanäle mit unterschiedlich großen Durchflussquerschnitten aufweist. Durch den Einsatz von Rückschlagscheiben mit Bypassklappen kann das Dämpfungsverhalten in Zug- und Druckrichtung getrennt und präzise eingestellt werden, wodurch sich der Komfort und die Regelbarkeit bei kleinen Kolbengeschwindigkeiten verbessern.

Aus der DE 10 2008 015 415 A1 ist ein Dämpfungsventil für einen hydraulischen Schwingungsdämpfer bekannt, das einen axial beweglichen Stellschieber mit elektromagnetischem Linearantrieb und präziser Führung in einem Polrohr mit Lagerring umfasst. Durch diese Lagerung sowie eine herzförmige Ventilöffnung im Führungskörper werden definierte Stellbewegungen, eine exakte Dämpfungsregelung und ein ruhiger, störkraftarmer Betrieb des Ventils erreicht.

Die DE 10 2015 102 478 A1 beschreibt einen regelbaren Schwingungsdämpfer mit einem Bypasskanal, dessen Durchflussquerschnitt in Zug- und Druckrichtung unterschiedlich ist. Dies wird durch Bypassdrosseln und parallel geschaltete Einwegeventile realisiert, die ablaufseitig eines Vorsteuerventils angeordnet sind, wodurch eine separate Anpassung des Dämpfungsverhaltens für beide Bewegungsrichtungen ermöglicht wird.

Die US 5,996,748 A beschreibt ein elektronisch gesteuertes Stoßdämpfersystem mit einem elektromagnetisch betätigten Ventil, das den Flüssigkeitsstrom zwischen den Dämpferkammern variabel regelt. Durch die Kombination aus elektronischer Steuerung und Magnetventil kann die Dämpfungskraft an Fahrzustände angepasst werden, um sowohl Fahrkomfort als auch Fahrzeugstabilität zu verbessern.

Aus der US 2015/0276003 A1 ist ein hydraulischer Stoßdämpfer mit einer Dämpfungskraft-Einstelleinheit bekannt, bei der ein elektrischer Motor über eine Spindelmechanik einen Schubstift linear bewegt, um die Öffnungsfläche eines Ölkanals zu verändern. Durch ein zweistufiges Schiebemechanismus-System mit Federentkopplung wird verhindert, dass Rückkräfte auf den Motor wirken, wodurch Desynchronisation und Beschädigung des Motors vermieden und eine stabile Dämpfungsregelung gewährleistet wird.

Aus der WO 2016/192847 A1 ist ein Schwingungsdämpfer mit im Kolben vorgesehenen Rückschlagventil bekannt. In der Zugstufe schließt das Rückschlagventil und das steuerbare Arbeitsventil ist in Reihe zu den parallel geschalteten steuerbaren Arbeitsventilen geschaltet.

Die DE 10 2014 215 571 A1 offenbart ein verstellbares Dämpferventil mit zwei über ein Überdruckventil miteinander verbundenen Druckräumen, wobei einer der Druckräume zur Steuerung des Dämpferventils ausgebildet ist.

Aus der DE 41 29 581 A1 ist eine steuerbare Ventilanordnung für regelbare Zweirohr-Schwingungsdämpfer bekannt. Die DE 41 29 581 A1 kombiniert einen druckausgeglichenen Ventilkörper, der eine Drosselfunktion für kleine Volumenströme steuert, mit einem druckunausgeglichenen Ventilkörper, der eine Druckbegrenzungsfunktion für größere Volumenströme erfüllt, um den Federungskomfort und die Regelbarkeit von Fahrzeugdämpfern zu verbessern.

Die DE 39 17 064 A1 beschreibt einen elektronisch gesteuerten Stoßdämpfer, der auch bei einem Defekt eine definierte, vorzugsweise mittlere Dämpfung beibehält. Dies wird durch eine vorbestimmbare Drosselstelle erreicht, die bei Ausfall der Magnetsteuerung automatisch wirksam wird und so eine sichere und konstante Dämpfungscharakteristik sicherstellt.

Aus der DE 10 2014 201 516 A1 ist eine Radaufhängung mit Stabilisatoranordnung bekannt, bei der der Stabilisator über eine Kolben-Zylinder-Einheit als Wankdämpfer mit dem Radaufhängungselement verbunden ist. Die Anordnung ermöglicht durch ventilgesteuerte Hydraulikkanäle mit Drosseln und Rückschlagventilen eine adaptive, frequenzabhängige Dämpfung, die das Wanken des Fahrzeugs reduziert und den Fahrkomfort verbessert.

### Offenbarung der Erfindung

Vor diesem Hintergrund war es die objektive technische Aufgabe der vorliegenden Erfindung, im Vergleich zum Stand der Technik, das Verhalten von hydraulischen Schwingungsdämpfern zu verbessern, sodass die Anwendung der Schwingungsdämpfer komfortabler ist und die Abnutzung vermindert wird und somit die Lebensdauer der Bauteile erhöht wird.

In der vorliegenden Erfindung wird diese Aufgabe gelöst durch einen hydraulischen Schwingungsdämpfer, insbesondere für ein Fahrzeugfahrwerk, umfassend ein Zylinderrohr zur Aufnahme eines Hydraulikfluides, einen Kolben, der innerhalb des Zylinderrohres entlang einer Zylinderrohrachse axial bewegbar ist und der das Zylinderrohr in zwei Arbeitsräume unterteilt, eine Kolbenstange, die parallel zur Zylinderrohrachse ausgerichtet und mit dem Kolben verbunden ist, wobei zumindest eine Ventilbaugruppe zur Dämpfung der Kolbenbewegung in einer Betätigungsrichtung an einer Fluiddurchführung angeordnet ist, wobei zusätzlich zu der Fluiddurchführung zwischen den beiden Arbeitsräumen ein Bypasskanal, der zumindest einen Unterkanal umfasst, vorgesehen ist, wobei zumindest eine Ventilanordnung mit kontinuierlich verstellbarer Dämpfkraft vorgesehen ist, die den Durchfluss durch die Fluiddurchführung und den Unterkanal reguliert, dadurch gekennzeichnet, dass der Unterkanal zumindest einen Drosselungsmechanismus mit zumindest einer Drossel sowie zumindest ein Rückschlagventil umfasst, wobei die Drossel und das Rückschlagventil des Unterkanals zueinander in Reihe angeordnet sind, wobei die Sperrrichtung des Rückschlagventils zu der von der Drossel abgewandten Seite zeigt, wobei das Rückschlagventil dadurch ausgebildet ist, dass es in seiner geöffneten Stellung nur von dem Volumenstrom durchströmt wird, der den Unterkanal durchströmt, an dem es angeordnet ist, wobei das Rückschlagventil des Unterkanals und die Fluiddurchführung mit der Ventilbaugruppe zueinander parallel geschaltet sind und wobei die Ventilanordnung ein kontinuierlich verstellbares Stellventil umfasst, das in Reihe zu dem Unterkanal und der Fluiddurchführung geschaltet ist.

Der erfindungsgemäße Schwingungsdämpfer hat im Vergleich zum Stand der Technik den Vorteil, dass das Rückschlagventil des Unterkanals des Bypasskanals und eine Drossel, die in dem Unterkanal angeordnet ist, in Reihe geschaltet sind. Dadurch ist der Volumenstrom durch das Rückschlagventil in Durchlassrichtung, im Vergleich zur Offenbarung des Standes der Technik, gering. Dies verringert einerseits die Anforderungen an die technische Ausgestaltung des Rückschlagventils und erleichtert somit seine Integration in den Schwingungsdämpfer. Andererseits vermindert es prinzipiell die Öffnungsweite eines Rückschlagelements (beispielsweise einer Rückschlagscheibe, einer Rückschlagkugel, eines Rückschlagkegels, etc.) des Rückschlagventils und somit beispielsweise die Kraft auf eine Rückstellfeder, die in Durchflussrichtung des Rückschlagventils auftritt. Dadurch verringert sich ebenso beispielsweise der Hub der Rückschlagscheibe (bzw. des Rückschlagelements) des Rückschlagventils, was vorteilhaft für die Lebensdauer des Bauteils ist und gleichzeitig die Geräuschentwicklung beim Verschließen des Rückschlagventils verringert. Somit ist der Komfort im Vergleich zum Stand der Technik erhöht.

Die Sperrrichtung des Rückschlagventils zeigt zu der von der Drossel abgewandten Seite.

Gemäß einer bevorzugten Ausführung der vorliegenden Erfindung ist es vorgesehen, dass das Rückschlagventil den Volumenstrom durch den zumindest einen Unterkanal des Bypasskanals bei einer der beiden möglichen Bewegungsrichtungen des Kolbens blockiert.

In dieser bevorzugten Ausführungsvariante der Erfindung wird der Volumenstrom durch den Unterkanal des Bypasskanals, an dem das Rückschlagventil angeordnet ist, durch das Rückschlagventil in Durchflussrichtung zugelassen und bei einer Durchströmung des Rückschlagventil in seine Sperrrichtung, unterbunden.

Das Rückschlagventil ist dadurch ausgebildet, dass es in seiner geöffneten Stellung nur von dem Volumenstrom durchströmt wird, der den Unterkanal durchströmt, an dem es angeordnet ist.

In dieser Ausführungsvariante ist die Durchströmung durch das Rückschlagventil des Unterkanals durch die zumindest eine Drossel die im gleichen Unterkanal angeordnet ist, in Durchflussrichtung des Sperrventils limitiert. Hierdurch kann eine, im Vergleich zum Stand der Technik, geringe Durchströmung des Rückschlagventils gewährleistet werden, was den Rückschlag des Rückschlagventils bei einer Umkehrung der Bewegungsrichtung des Kolbens verringert, was vorteilhaft für die Lebensdauer des Bauteils ist und gleichzeitig die Geräuschentwicklung beim Verschließen des Rückschlagventils verringert. Somit ist das Komfortverhalten im Vergleich zum Stand der Technik erhöht.

Gemäß einer weiteren Ausführungsvariante der vorliegenden Erfindung ist es vorgesehen, dass das Rückschlagventil des Unterkanals eine Rückschlagscheibe aufweist, wobei diese Rückschlagscheibe einen geringeren Vordruck als 150000 Pa aufweist, und vorzugsweise einen geringeren Vordruck als 100000 Pa aufweist.

Hierdurch wird gemäß einer Ausführungsform der vorliegenden Erfindung ein Rückschlagventil mit einer Rückschlagscheibe verwendet, wobei diese Rückschlagscheibe einen geringen Vordruck von unter 150000 Pa, und vorzugsweise von unter 100000 Pa aufweist. Dieser geringe Vordruck auf die Rückschlagscheibe des Rückschlagventils ist dafür geeignet, den geringen Volumenstrom des Unterkanals des Bypasskanals, an dem das Rückschlagventil angeordnet ist, zu kontrollieren und vorteilhaft für die Geräuschentwicklung während des Betriebs.

Gemäß einer bevorzugten Ausführung der vorliegenden Erfindung ist es vorgesehen, dass die Ventilanordnung mit kontinuierlich verstellbarer Dämpfkraft zumindest ein elektromagnetisch betätigbares, kontinuierlich verstellbares Stellventil umfasst.

Hierdurch wird erfindungsgemäß ermöglicht, dass die Dämpfung des Schwingungsdämpfers kontinuierlich eingestellt werden kann und somit sehr flexibel an verschiedenste Anforderungen angepasst werden kann. Dieser Dämpfungsmechanismus ist im Speziellen vorteilhaft gegenüber Verfahren, die nur eine limitierte Anzahl an verschiedenen Dämpfungsstufen ermöglichen.

Gemäß einer bevorzugten Ausführung der vorliegenden Erfindung ist es vorgesehen, dass der Schwingungsdämpfer eine weitere Ventilbaugruppe zur Dämpfung der Kolbenbewegung in eine zweite Betätigungsrichtung umfasst, die an einer weiteren Fluiddurchführung angeordnet ist.

Gemäß einer bevorzugten Ausführung der vorliegenden Erfindung ist es vorgesehen, dass der Bypasskanal einen weiteren Unterkanal aufweist, wobei zumindest eine weitere Ventilanordnung mit kontinuierlich verstellbarer Dämpfkraft vorgesehen ist, die den Durchfluss durch die weitere Fluiddurchführung und den weiteren Unterkanal reguliert.

Gemäß einer weiter bevorzugten Ausführung der vorliegenden Erfindung ist es vorgesehen, dass der weitere Unterkanal zumindest ein weiteres Rückschlagventil und einen weiteren Drosselungsmechanismus, der zumindest eine weitere Drossel aufweist, umfasst, wobei die weitere Drossel und das weitere Rückschlagventil zueinander in Reihe angeordnet sind, wobei das weitere Rückschlagventil dadurch ausgebildet ist, dass es in seiner geöffneten Stellung nur von dem Volumenstrom durchströmt wird, der den weiteren Unterkanal durchströmt, an dem es angeordnet ist.

Durch diese bevorzugte Ausführung der Erfindung, kann jeweils ein Unterkanal des Bypasses bei der Druckstufe des Kolbens und ein Unterkanal bei der Zugstufe des Kolbens durchströmt werden. Der jeweils andere Unterkanal wird durch das jeweilige Rückschlagventil, das in diesem Unterkanal angeordnet ist, verschlossen. Dadurch kann für Zug- und Druckstufe des Kolbens jeweils eine unterschiedliche Dämpfung realisiert werden.

Darüber hinaus ist gemäß einer bevorzugten Ausführung der vorliegenden Erfindung vorgesehen, dass der Unterkanal nur bei der Druckstufe und der weitere Unterkanal nur bei der Zugstufe des Kolbens durchlässig ist.

Durch diese bevorzugte Ausführung der Erfindung, kann jeweils ein Unterkanal des Bypasses bei der Druckstufe des Kolbens und ein Unterkanal bei der Zugstufe des Kolbens durchströmt werden. Dadurch kann für Zug- und Druckstufe des Kolbens jeweils eine unterschiedliche Dämpfung realisiert werden.

Gemäß einer bevorzugten Ausführung der vorliegenden Erfindung ist es vorgesehen, dass die weitere Ventilanordnung mit kontinuierlich verstellbarer Dämpfkraft zumindest ein elektromagnetisch betätigbares, kontinuierlich verstellbares Stellventil umfasst.

Hierdurch wird erfindungsgemäß ermöglicht, dass die Dämpfung des Schwingungsdämpfers auch für die zweite Bewegungsrichtung des Kolbens kontinuierlich eingestellt werden kann und somit sehr flexibel an verschiedenste Anforderungen angepasst werden kann. Dieser Dämpfungsmechanismus ist im Speziellen vorteilhaft gegenüber Verfahren, die nur eine limitierte Anzahl an verschiedenen Dämpfungsstufen ermöglichen.

Gemäß einer weiter bevorzugten Ausführung der vorliegenden Erfindung ist es vorgesehen, dass der Unterkanal des Bypasskanals und der weitere Unterkanal des Bypasskanals identische Rückschlagventile und identische Drosselungsmechanismen aufweisen.

Durch diese bevorzugte Ausbildung der Erfindung können die Produktionskosten verringert werden, da identische Bauteile für beide Ventilanordnungen für die beiden Unterkanäle verwendet werden.

Gemäß einer weiter bevorzugten Ausführung der vorliegenden Erfindung ist es vorgesehen, dass der Bypasskanal, inklusive der Komponenten der beiden Unterkanäle, in einem gemeinsamen Gehäuse mit einem ersten und einem zweiten Hydraulikraum angeordnet ist, wobei der erste Hydraulikraum den Bypasskanal über eine erste Bohrung mit dem ersten Arbeitsraum des Zylinderrohrs verbindet und der zweite Hydraulikraum den Bypasskanal über eine zweite Bohrung mit dem zweiten Arbeitsraum des Zylinderrohrs verbindet.

Durch diese bevorzugte Ausbildung der Erfindung können der Bypasskanal und die ihm angehörigen Unterkanäle, inklusive der von den Unterkanälen umfassten Rückschlagventile und Drosselungsmechanismen, als Rucksackventile ausgebildet werden. Dies bringt vor allem den praktischen Vorteil, dass die Rucksackventile unkompliziert an verschiedenen Zylinderrohren und Kolben angebracht werden können. Dies erhöht die Verwendbarkeit und senkt Produktionskosten.

Gemäß einer weiter bevorzugten Ausführung der vorliegenden Erfindung ist es vorgesehen, dass das Gehäuse zylindrisch ausgebildet ist.

Diese bevorzugte Ausführungsweise der Erfindung ermöglicht die Verwendung von Bauteilen mit kreisförmiger Grundfläche, also die Kompatibilität mit einer Vielzahl von Ventilen etc.

Gemäß einer weiteren bevorzugten Ausführung der Erfindung ist es vorgesehen, dass der Unterkanal des Bypasskanals bzw. die Komponenten des Unterkanals des Bypasskanals, insbesondere die Drossel (der Drosselungsmechanismus) und das Rückschlagventil in einem separaten Gehäuse angeordnet sind.

Gemäß einer weiteren bevorzugten Ausführung der Erfindung ist es vorgesehen, dass die Drossel (der Drosselungsmechanismus), das Rückschlagventil und die Ventilanordnung mit kontinuierlich verstellbarer Dämpfkraft in einem separaten Gehäuse angeordnet sind.

Gemäß einer weiteren bevorzugten Ausführung der Erfindung ist es vorgesehen, dass die Drossel (der Drosselungsmechanismus), das Rückschlagventil, die Ventilanordnung mit kontinuierlich verstellbarer Dämpfkraft, die Fluiddurchführung und die Ventilbaugruppe in einem separaten Gehäuse angeordnet sind.

Gemäß einer weiteren bevorzugten Ausführung der Erfindung ist es vorgesehen, dass der weitere Unterkanal des Bypasskanals bzw. die Komponenten des weiteren Unterkanals des Bypasskanals, insbesondere die weitere Drossel (der weitere Drosselungsmechanismus) und das weitere Rückschlagventil in einem weiteren separaten Gehäuse angeordnet sind.

Gemäß einer weiteren bevorzugten Ausführung der Erfindung ist es vorgesehen, dass die weitere Drossel (der weitere Drosselungsmechanismus), das weitere Rückschlagventil und die weitere Ventilanordnung mit kontinuierlich verstellbarer Dämpfkraft in einem weiteren separaten Gehäuse angeordnet sind.

Gemäß einer weiteren bevorzugten Ausführung der Erfindung ist es vorgesehen, dass die weitere Drossel (der weitere Drosselungsmechanismus), das weitere Rückschlagventil und die weitere Ventilanordnung mit kontinuierlich verstellbarer Dämpfkraft, die weitere Fluiddurchführung und die weitere Ventilbaugruppe in einem weiteren separaten Gehäuse angeordnet sind.

### Kurze Beschreibung der Zeichnungen

- **Figur 1**: zeigt ein Blockschaltbild gemäß einer beispielhaften Ausführungsform der vorliegenden Erfindung. Die aufwärts zeigenden Pfeile zeigen die Durchflussrichtung für die Druckstufe des Kolbens an und die abwärts zeigenden Pfeile die Durchflussrichtung für die Zugstufe des Kolbens.
- **Figur 2**: zeigt ein Blockschaltbild gemäß einer weiteren beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

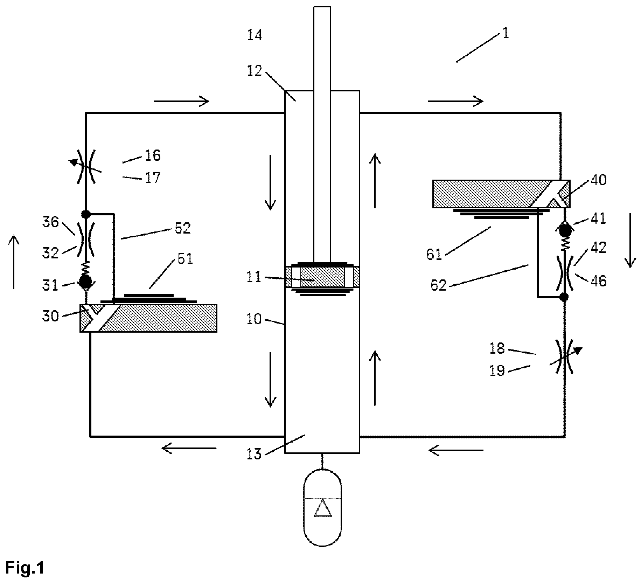

In **Figur 1** ist ein Blockschaltbild des hydraulischen Flusses in einem Schwingungsdämpfer 1 gemäß einer beispielhaften Ausführungsform der Erfindung dargestellt. Die aufwärts zeigenden Pfeile zeigen die Durchflussrichtung für die Druckstufe des Kolbens 11 an und die abwärts zeigenden Pfeile die Durchflussrichtung für die Zugstufe des Kolbens 11. Der Kolben 11 weist eine Kolbenstange 14 auf und unterteilt das Zylinderrohr 10 in einen ersten Arbeitsraum 12 und einen zweiten Arbeitsraum 13. Die beiden Unterkanäle 30, 40 des Bypasskanals sind dargestellt. Der Unterkanal 30 weist dabei eine Reihenschaltung aus einem Rückschlagventil 31 und einer in Reihe zu diesem Rückschlagventil 31 geschalteten Drossel 32 als Teil eines Drosselungsmechanismus 36 auf. Die Sperrrichtung des Rückschlagventils 31 zeigt dabei zu der von der Drossel 32 abgewandten Seite. Der Unterkanal 30 ist somit für die Druckstufe des Kolbens durchlässig. Während der Druckstufe wird das Rückschlagventil 31 dabei jedoch nicht vom Volumenstrom, der durch die Ventilbaugruppe 51 der Fluiddurchführung 52 fließt, durchströmt, sondern ausschließlich von dem Volumenstrom, der durch die Drossel 32 strömt und durch diese Drossel 32 gedrosselt ist. Dies wird dadurch erreicht, dass das Rückschlagventil 31 des Unterkanals 30 und die Fluiddurchführung 52 mit der Ventilbaugruppe 51 zueinander parallel geschaltet sind. Bei der Zugstufe des Kolbens versperrt das Rückschlagventil 31 den Durchfluss durch den Unterkanal 30. Darüber hinaus weist die Durchflussführung der Druckstufe eine Ventilanordnung mit kontinuierlich verstellbarer Dämpfkraft 16 auf, die ein kontinuierlich verstellbares Stellventil 17 umfasst, wobei das kontinuierlich verstellbares Stellventil 17 in Reihe zu dem Unterkanal 30 und der Fluiddurchführung 52 geschaltet ist. Mit diesem kontinuierlich verstellbaren Stellventil 17 kann die Dämpfung des Schwingungsdämpfers für die Druckstufe des Kolbens kontinuierlich verstellt werden. Der weitere Unterkanal 40 weist dabei eine Reihenschaltung aus einem weiteren Rückschlagventil 41 und einer in Reihe zu diesem weiteren Rückschlagventil 41 geschalteten weiteren Drossel 42 als Teil eines weiteren Drosselungsmechanismus 46 auf. Die Sperrrichtung des weiteren Rückschlagventils 41 zeigt dabei zu der von der weiteren Drossel 42 abgewandten Seite. Der weitere Unterkanal 40 ist somit für die Zugstufe des Kolbens durchlässig. Während der Zugstufe wird das weitere Rückschlagventil 41 dabei jedoch nicht vom Volumenstrom, der durch die weitere Ventilbaugruppe 61 der weiteren Fluiddurchführung 62 fließt, durchströmt, sondern ausschließlich von dem Volumenstrom, der durch die weitere Drossel 42 strömt und durch diese weitere Drossel 42 gedrosselt ist. Dies wird dadurch erreicht, dass das weitere Rückschlagventil 41 des weiteren Unterkanals 40 und die weitere Fluiddurchführung 62 mit der weiteren Ventilbaugruppe 61 zueinander parallel geschaltet sind. Bei der Druckstufe des Kolbens versperrt das weitere Rückschlagventil 41 den Durchfluss durch den weiteren Unterkanal 40. Des Weiteren weist die Durchflussführung der Zugstufe eine weitere Ventilanordnung mit kontinuierlich verstellbarer Dämpfkraft 18 auf, die ein weiteres kontinuierlich verstellbares Stellventil 19 umfasst, wobei das weitere kontinuierlich verstellbares Stellventil 19 in Reihe zu dem weiteren Unterkanal 40 und der weiteren Fluiddurchführung 62 geschaltet ist. Mit diesem weiteren kontinuierlich verstellbaren Stellventil 19 kann die Dämpfung des Schwingungsdämpfers für die Zugstufe des Kolbens kontinuierlich verstellt werden. Gemäß der in Figur 1 dargestellten beispielhaften Ausführungsform sind die Drossel 32 (der Drosselungsmechanismus 36), das Rückschlagventil 31, die Ventilanordnung mit kontinuierlich verstellbarer Dämpfkraft 16, die Fluiddurchführung 52 und die Ventilbaugruppe 51 in einem separaten Gehäuse, welches vorzugsweise zylindrisch ausgebildet ist, angeordnet, wobei die weitere Drossel 42 (der weitere Drosselungsmechanismus 46), das weitere Rückschlagventil 41, die weitere Ventilanordnung mit kontinuierlich verstellbarer Dämpfkraft 18, die weitere Fluiddurchführung 62 und die weitere Ventilbaugruppe 61 in einem weiteren separaten Gehäuse, welches vorzugsweise zylindrisch ausgebildet ist, angeordnet sind. Es ist möglich, dass anstelle des kontinuierlich verstellbaren Stellventils 17 und des weiteren kontinuierlich verstellbaren Stellventils 19, Stellventile mit festgelegten, insbesondere diskreten Verstellstufen verwendet werden.

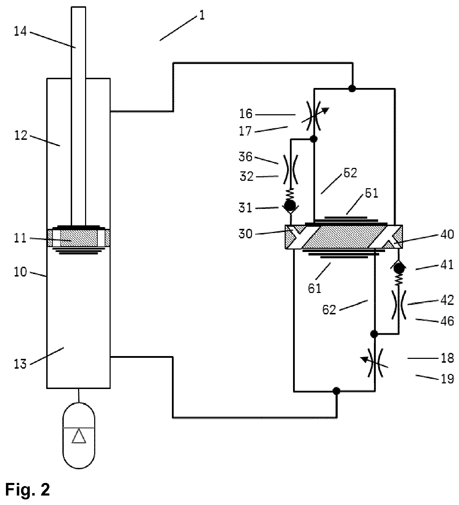

In **Figur 2** ist ein Blockschaltbild des hydraulischen Flusses in einem Schwingungsdämpfer 1 gemäß einer weiteren beispielhaften Ausführungsform der Erfindung dargestellt. Der Kolben 11 weist eine Kolbenstange 14 auf und unterteilt das Zylinderrohr 10 in einen ersten Arbeitsraum 12 und einen zweiten Arbeitsraum 13. Die beiden Unterkanäle 30, 40 des Bypasskanals sind dargestellt. Der Unterkanal 30 weist dabei eine Reihenschaltung aus einem Rückschlagventil 31 und einer in Reihe zu diesem Rückschlagventil 31 geschalteten Drossel 32 als Teil eines Drosselungsmechanismus 36 auf. Die Sperrrichtung des Rückschlagventils 31 zeigt dabei zu der von der Drossel 32 abgewandten Seite. Der Unterkanal 30 ist somit für die Druckstufe des Kolbens durchlässig. Während der Druckstufe wird das Rückschlagventil 31 dabei jedoch nicht vom Volumenstrom, der durch die Ventilbaugruppe 51 der Fluiddurchführung 52 fließt, durchströmt, sondern ausschließlich von dem Volumenstrom, der durch die Drossel 32 strömt und durch diese Drossel 32 gedrosselt ist. Dies wird dadurch erreicht, dass das Rückschlagventil 31 des Unterkanals 30 und die Fluiddurchführung 52 mit der Ventilbaugruppe 51 zueinander parallel geschaltet sind. Bei der Zugstufe des Kolbens versperrt das Rückschlagventil 31 den Durchfluss durch den Unterkanal 30. Darüber hinaus weist die Durchflussführung der Druckstufe eine Ventilanordnung mit kontinuierlich verstellbarer Dämpfkraft 16 auf, die ein kontinuierlich verstellbares Stellventil 17 umfasst, wobei das kontinuierlich verstellbares Stellventil 17 in Reihe zu dem Unterkanal 30 und der Fluiddurchführung 52 geschaltet ist. Mit diesem kontinuierlich verstellbaren Stellventil 17 kann die Dämpfung des Schwingungsdämpfers für die Druckstufe des Kolbens kontinuierlich verstellt werden. Der weitere Unterkanal 40 weist dabei eine Reihenschaltung aus einem weiteren Rückschlagventil 41 und einer in Reihe zu diesem weiteren Rückschlagventil 41 geschalteten weiteren Drossel 42 als Teil eines weiteren Drosselungsmechanismus 46 auf. Die Sperrrichtung des weiteren Rückschlagventils 41 zeigt dabei zu der von der weiteren Drossel 42 abgewandten Seite. Der weitere Unterkanal 40 ist somit für die Zugstufe des Kolbens durchlässig. Während der Zugstufe wird das weitere Rückschlagventil 41 dabei jedoch nicht vom Volumenstrom, der durch die weitere Ventilbaugruppe 61 der weiteren Fluiddurchführung 62 fließt, durchströmt, sondern ausschließlich von dem Volumenstrom, der durch die weitere Drossel 42 strömt und durch diese weitere Drossel 42 gedrosselt ist. Dies wird dadurch erreicht, dass das weitere Rückschlagventil 41 des weiteren Unterkanals 40 und die weitere Fluiddurchführung 62 mit der weiteren Ventilbaugruppe 61 zueinander parallel geschaltet sind. Bei der Druckstufe des Kolbens versperrt das weitere Rückschlagventil 41 den Durchfluss durch den weiteren Unterkanal 40. Des Weiteren weist die Durchflussführung der Zugstufe eine weitere Ventilanordnung mit kontinuierlich verstellbarer Dämpfkraft 18 auf, die ein weiteres kontinuierlich verstellbares Stellventil 19 umfasst, wobei das weitere kontinuierlich verstellbares Stellventil 19 in Reihe zu dem weiteren Unterkanal 40 und der weiteren Fluiddurchführung 62 geschaltet ist. Mit diesem weiteren kontinuierlich verstellbaren Stellventil 19 kann die Dämpfung des Schwingungsdämpfers für die Zugstufe des Kolbens kontinuierlich verstellt werden. Gemäß der in Figur 2 dargestellten weiteren beispielhaften Ausführungsform sind die Drossel 32 (der Drosselungsmechanismus 36), das Rückschlagventil 31, die Ventilanordnung mit kontinuierlich verstellbarer Dämpfkraft 16, die Fluiddurchführung 52 und die Ventilbaugruppe 51 sowie die weitere Drossel 42 (der weitere Drosselungsmechanismus 46), das weitere Rückschlagventil 41, die weitere Ventilanordnung mit kontinuierlich verstellbarer Dämpfkraft 18, die weitere Fluiddurchführung 62 und die weitere Ventilbaugruppe 61 in einem gemeinsamen Gehäuse, welches vorzugsweise zylindrisch ausgebildet ist, angeordnet,. Es ist möglich, dass anstelle des kontinuierlich verstellbaren Stellventils 17 und des weiteren kontinuierlich verstellbaren Stellventils 19, Stellventile mit festgelegten, insbesondere diskreten Verstellstufen verwendet werden.

### BEZUGSZEICHENLISTE

- 1: Hydraulischer Schwingungsdämpfer
- 10: Zylinderrohr
- 11: Kolben
- 12: Erster Arbeitsraum
- 13: Zweiter Arbeitsraum
- 14: Kolbenstange
- 16: Ventilanordnung mit kontinuierlich verstellbarer Dämpfkraft
- 17: kontinuierlich verstellbares Stellventil
- 18: weitere Ventilanordnung mit kontinuierlich verstellbarer Dämpfkraft
- 19: weiteres kontinuierlich verstellbares Stellventil Bypasskanal
- 30: Unterkanal
- 31: Rückschlagventil
- 32: Drossel
- 33: Rückschlagscheibe
- 36: Drosselungsmechanismus
- 40: weiterer Unterkanal
- 41: weiteres Rückschlagventil
- 42: weitere Drossel
- 46: weiterer Drosselungsmechanismus
- 51: Ventilbaugruppe
- 52: Fluiddurchführung
- 61: weitere Ventilbaugruppe
- 62: weitere Fluiddurchführung

## Patentansprüche

1. Hydraulischer Schwingungsdämpfer (1), insbesondere für ein Fahrzeugfahrwerk, umfassend ein Zylinderrohr (10) zur Aufnahme eines Hydraulikfluides, einen Kolben (11), der innerhalb des Zylinderrohres (10) entlang einer Zylinderrohrachse axial bewegbar ist und der das Zylinderrohr in zwei Arbeitsräume (12, 13) unterteilt, eine Kolbenstange (14), die parallel zur Zylinderrohrachse ausgerichtet und mit dem Kolben (11) verbunden ist, wobei zumindest eine Ventilbaugruppe (51) zur Dämpfung der Kolbenbewegung in einer Betätigungsrichtung an einer Fluiddurchführung (52) angeordnet ist, wobei zusätzlich zu der Fluiddurchführung zwischen den beiden Arbeitsräumen ein Bypasskanal, der zumindest einen Unterkanal (30) umfasst, vorgesehen ist, wobei zumindest eine Ventilanordnung (16) mit kontinuierlich verstellbarer Dämpfkraft vorgesehen ist, die den Durchfluss durch die Fluiddurchführung (52) und den Unterkanal (30) reguliert, **dadurch gekennzeichnet, dass** der Unterkanal (30) zumindest einen Drosselungsmechanismus (36) mit zumindest einer Drossel (32) sowie zumindest ein Rückschlagventil (31) umfasst, wobei die Drossel (32) und das Rückschlagventil (31) des Unterkanals (30) zueinander in Reihe angeordnet sind, wobei die Sperrrichtung des Rückschlagventils (31) zu der von der Drossel (32) abgewandten Seite zeigt, wobei das Rückschlagventil (31) dadurch ausgebildet ist, dass es in seiner geöffneten Stellung nur von dem Volumenstrom durchströmt wird, der den Unterkanal (30) durchströmt, an dem es angeordnet ist, wobei das Rückschlagventil (31) des Unterkanals (30) und die Fluiddurchführung (52) mit der Ventilbaugruppe (51) zueinander parallel geschaltet sind und wobei die Ventilanordnung (16) ein kontinuierlich verstellbares Stellventil (17) umfasst, das in Reihe zu dem Unterkanal (30) und der Fluiddurchführung (52) geschaltet ist.

2. Hydraulischer Schwingungsdämpfer nach einem der vorherigen Ansprüche, wobei das Rückschlagventil (31) den Volumenstrom durch den zumindest einen Unterkanal (30) des Bypasskanals bei einer der beiden möglichen Bewegungsrichtungen des Kolbens blockiert.

3. Hydraulischer Schwingungsdämpfer nach einem der vorherigen Ansprüche, wobei das Rückschlagventil (31) des Unterkanals (30) eine Rückschlagscheibe (33) aufweist, wobei diese Rückschlagscheibe einen geringeren Vordruck als 150000 Pa aufweist, und vorzugsweise einen geringeren Vordruck als 100000 Pa aufweist.

4. Hydraulischer Schwingungsdämpfer nach einem der vorherigen Ansprüche, wobei die Ventilanordnung mit kontinuierlich verstellbarer Dämpfkraft (16) zumindest ein elektromagnetisch betätigbares, kontinuierlich verstellbares Stellventil (17) umfasst.

5. Hydraulischer Schwingungsdämpfer nach einem der vorherigen Ansprüche, wobei der Schwingungsdämpfer (1) eine weitere Ventilbaugruppe (61) zur Dämpfung der Kolbenbewegung in eine zweite Betätigungsrichtung umfasst, die an einer weiteren Fluiddurchführung (62) angeordnet ist.

6. Hydraulischer Schwingungsdämpfer nach Anspruch 5, wobei der Bypasskanal einen weiteren Unterkanal (40) aufweist, wobei zumindest eine weitere Ventilanordnung mit kontinuierlich verstellbarer Dämpfkraft (18) vorgesehen ist, die den Durchfluss durch die weitere Fluiddurchführung (62) und den weiteren Unterkanal (40) reguliert.

7. Hydraulischer Schwingungsdämpfer nach Anspruch 6, wobei der weitere Unterkanal (40) zumindest ein weiteres Rückschlagventil (41) und einen weiteren Drosselungsmechanismus (46), der zumindest eine weitere Drossel (42) aufweist, umfasst, wobei die weitere Drossel (42) und das weitere Rückschlagventil (41) zueinander in Reihe angeordnet sind, wobei das weitere Rückschlagventil (41) dadurch ausgebildet ist, dass es in seiner geöffneten Stellung nur von dem Volumenstrom durchströmt wird, der den weiteren Unterkanal (40) durchströmt, an dem es angeordnet ist.

8. Hydraulischer Schwingungsdämpfer nach einem der Ansprüche 6 oder 7, wobei der Unterkanal (30) nur bei der Druckstufe und der weitere Unterkanal (40) nur bei der Zugstufe des Kolbens (11) durchlässig ist.

9. Hydraulischer Schwingungsdämpfer nach einem der Ansprüche 6 bis 8, wobei die weitere Ventilanordnung mit kontinuierlich verstellbarer Dämpfkraft (18) zumindest ein weiteres elektromagnetisch betätigbares, kontinuierlich verstellbares Stellventil (19) umfasst.

10. Hydraulischer Schwingungsdämpfer nach einem der Ansprüche 7 bis 9, wobei der Unterkanal (30) des Bypasskanals und der weitere Unterkanal (40) des Bypasskanals identische Rückschlagventile (31, 41) und identische Drosselungsmechanismen (36, 46) aufweisen.

11. Hydraulischer Schwingungsdämpfer nach einem der Ansprüche 6 bis 10, wobei der Bypasskanal, inklusive der Komponenten der beiden Unterkanäle (30, 40), in einem gemeinsamen Gehäuse mit einem ersten und einem zweiten Hydraulikraum angeordnet ist, wobei der erste Hydraulikraum den Bypasskanal über eine erste Bohrung mit dem ersten Arbeitsraum (12) des Zylinderrohrs verbindet und der zweite Hydraulikraum den Bypasskanal über eine zweite Bohrung mit dem zweiten Arbeitsraum (13) des Zylinderrohrs verbindet.

12. Hydraulischer Schwingungsdämpfer nach Anspruch 11, wobei das Gehäuse zylindrisch ausgebildet ist.

## Claims

1. Hydraulic vibration damper (1), in particular for a vehicle chassis, comprising a cylinder tube (10) for containing a hydraulic fluid, a piston (11) which is axially movable within the cylinder tube (10) along a cylinder tube axis and which divides the cylinder tube into two working chambers (12, 13), a piston rod (14), which is aligned parallel to the cylinder tube axis and is connected to the piston (11), wherein at least one valve assembly (51) for damping the piston movement in an actuation direction is arranged at a fluid passage (52), wherein, in addition to the fluid passage, a bypass channel comprising at least one sub-channel (30) is provided, wherein at least one valve arrangement (16) with continuously adjustable damping force is provided, which regulates the flow through the fluid passage (52) and the sub-channel (30), **characterised in that** the sub-channel (30) comprises at least one throttling mechanism (36) with at least one throttle (32) as well as at least one check valve (31), wherein the throttle (32) and the check valve (31) of the sub-channel (30) are arranged in series with one another, wherein the blocking direction of the non-return valve (31) points towards the side facing away from the throttle (32), wherein the non-return valve (31) is designed such that, in its open position, it is traversed only by the flow rate passing through the sub-channel (30) on which it is arranged, wherein the non-return valve (31) of the sub-channel (30) and the fluid passage (52) are connected in parallel with the valve assembly (51), and wherein the valve arrangement (16) comprises a continuously adjustable control valve (17) which is connected in series with the sub-channel (30) and the fluid passage (52).

2. Hydraulic vibration damper according to one of the preceding claims, wherein the check valve (31) blocks the flow rate through the at least one sub-channel (30) of the bypass channel in one of the two possible directions of movement of the piston.

3. Hydraulic vibration damper according to one of the preceding claims, wherein the check valve (31) of the sub-channel (30) comprises a check disc (33), wherein this check disc has a seat pressure of less than 150,000 Pa, and preferably a seat pressure of less than 100,000 Pa.

4. Hydraulic vibration damper according to any of the preceding claims, wherein the valve assembly with continuously adjustable damping force (16) comprises at least one electromagnetically actuated, continuously adjustable control valve (17).

5. Hydraulic vibration damper according to any one of the preceding claims, wherein the vibration damper (1) comprises a further valve assembly (61) for damping the piston movement in a second actuation direction, which is arranged at a further fluid passage (62).

6. Hydraulic vibration damper according to claim 5, wherein the bypass channel comprises a further sub-channel (40), wherein at least one further valve assembly with continuously adjustable damping force (18) is provided, which regulates the flow through the further fluid passage (62) and the further sub-channel (40).

7. Hydraulic vibration damper according to claim 6, wherein the further sub-channel (40) comprises at least one further check valve (41) and a further throttling mechanism (46) comprising at least one further throttle (42), wherein the further throttle (42) and the further check valve (41) are arranged in series with one another, wherein the further check valve (41) is designed such that, in its open position, it is traversed only by the volume flow passing through the further sub-channel (40) on which it is arranged.

8. Hydraulic vibration damper according to one of claims 6 or 7, wherein the sub-channel (30) is permeable only during the compression stroke and the further sub-channel (40) is permeable only during the rebound stroke of the piston (11).

9. Hydraulic vibration damper according to any one of claims 6 to 8, wherein the further valve arrangement with continuously adjustable damping force (18) comprises at least one further electromagnetically actuated, continuously adjustable control valve (19).

10. Hydraulic vibration damper according to any one of claims 7 to 9, wherein the sub-channel (30) of the bypass channel and the further sub-channel (40) of the bypass channel have identical check valves (31, 41) and identical throttling mechanisms (36, 46).

11. A hydraulic vibration damper according to any one of claims 6 to 10, wherein the bypass channel , including the components of the two sub-channels (30, 40), is arranged in a common housing with a first and a second hydraulic chamber, wherein the first hydraulic chamber connects the bypass channel to the first working chamber (12) of the cylinder tube via a first bore, and the second hydraulic chamber connects the bypass channel to the second working chamber (13) of the cylinder tube via a second bore.

12. Hydraulic vibration damper according to claim 11, wherein the housing is cylindrical in shape.

## Revendications

1. Amortisseur de vibrations hydraulique (1), en particulier pour un châssis de véhicule, comprenant un tube cylindrique (10) destiné à contenir un fluide hydraulique, un piston (11) qui est mobile axialement à l'intérieur du tube cylindrique (10) le long d'un axe du tube cylindrique et qui divise le tube cylindrique en deux chambres de travail (12, 13), une tige de piston (14) qui est orientée parallèlement à l'axe du tube cylindrique et reliée au piston (11), au moins un dispositif de soupape (51) étant disposé sur un canal de fluide (52) pour amortir le mouvement du piston dans un sens d'actionnement, un canal de dérivation (20) est prévu, qui comprend au moins un canal secondaire (30), au moins un dispositif de soupape (16) à force d'amortissement réglable en continu étant prévu, qui régule le débit à travers le canal de fluide (52) et le canal secondaire (30), **caractérisé en ce que** le canal secondaire (30) comprend au moins un dispositif d'étranglement (36) avec au moins un étranglement (32) ainsi qu'au moins un clapet anti-retour (31), l'étranglement (32) et le clapet anti-retour (31) du canal secondaire (30) étant disposés en série l'un par rapport à l'autre, le sens de blocage du clapet anti-retour (31) étant orienté vers le côté (32) opposé à l'étrangleur, le clapet anti-retour (31) étant conçu de telle sorte que, dans sa position ouverte, il n'est traversé que par le flux circulant dans le canal partiel (30) sur lequel il est disposé, le clapet anti-retour (31) du canal partiel (30) et le passage de fluide (52) étant montés en parallèle avec l'ensemble de vannes (51), et l'ensemble de vannes (16) comprenant une vanne de régulation (17) réglable en continu, qui est montée en série avec le canal partiel (30) et le canal de fluide (52).

2. Amortisseur de vibrations hydraulique selon l'une des revendications précédentes, dans lequel le clapet anti-retour (31) bloque l'écoulement à travers le au moins un canal partiel (30) du canal de dérivation (20) dans l'une des deux directions de déplacement possibles du piston.

3. Amortisseur de vibrations hydraulique selon l'une des revendications précédentes, dans lequel le clapet anti-retour (31) du canal secondaire (30) comprend un disque anti-retour (33), ce disque anti-retour présentant une pression de siège inférieure à 150 000 Pa et de préférence une pression de siège inférieure à 100 000 Pa.

4. Amortisseur de vibrations hydraulique selon l'une des revendications précédentes, dans lequel le dispositif de soupape à force d'amortissement réglable en continu (16) comprend au moins une soupape de commande (17) à actionnement électromagnétique et réglable en continu.

5. Amortisseur de vibrations hydraulique selon l'une des revendications précédentes, dans lequel l'amortisseur de vibrations (1) comprend un autre agencement de soupapes (61) destiné à amortir le mouvement du piston dans une deuxième direction d'actionnement, qui est disposé sur un autre canal de fluide (62).

6. Amortisseur de vibrations hydraulique selon la revendication 5, dans lequel le canal de dérivation (20) comprend un autre canal partiel (40), au moins un autre ensemble de soupapes à force d'amortissement réglable en continu (18) étant prévu, qui régule le débit à travers l'autre canal de fluide (62) et l'autre canal partiel (40).

7. Amortisseur de vibrations hydraulique selon la revendication 6, dans lequel le canal partiel supplémentaire (40) comprend au moins un clapet anti-retour supplémentaire (41) et un dispositif d'étranglement supplémentaire (46) comportant au moins un étranglement supplémentaire (42), l'étranglement supplémentaire (42) et le clapet anti-retour supplémentaire (41) étant disposés en série l'un par rapport à l'autre, le clapet anti-retour supplémentaire (41) étant conçu de telle sorte que, dans sa position ouverte, il n'est traversé que par le débit volumique s'écoulant à travers le canal partiel supplémentaire (40) sur lequel il est disposé.

8. Amortisseur de vibrations hydraulique selon l'une des revendications 6 ou 7, dans lequel le canal partiel (30) n'est perméable que pendant la course de compression et l'autre canal partiel (40) n'est perméable que pendant la course de retour du piston (11).

9. Amortisseur de vibrations hydraulique selon l'une des revendications 6 à 8, dans lequel l'autre dispositif de soupape à force d'amortissement réglable en continu (18) comprend au moins une autre soupape de commande (19) à actionnement électromagnétique et à réglage continu.

10. Amortisseur de vibrations hydraulique selon l'une des revendications 6 à 9, dans lequel le canal partiel (30) du canal de dérivation (20) et l'autre canal partiel (40) du canal de dérivation (20) comportent des clapets anti-retour identiques (31, 41) et des mécanismes d'étranglement identiques (36, 46).

11. Amortisseur de vibrations hydraulique selon l'une des revendications 6 à 10, dans lequel le canal de dérivation (20), y compris les composants des deux canaux partiels (30, 40), est disposé dans un boîtier commun comportant une première et une deuxième chambres hydrauliques, la première chambre hydraulique reliant le canal de dérivation (20) à la première chambre de travail (12) du tube de cylindre par l'intermédiaire d'un premier alésage, et la deuxième chambre hydraulique relie le canal de dérivation (20) à la deuxième chambre de travail (13) du tube de cylindre par l'intermédiaire d'un deuxième alésage.

12. Amortisseur de vibrations hydraulique selon la revendication 11, dans lequel le boîtier présente une forme cylindrique.
